(19) Europäisches Patentamt

European Patent Office

Office européen des brevets

(11) Publication number : **0 556 021 A1**

## (12) EUROPEAN PATENT APPLICATION

(21) Application number : **93300933.4**

(22) Date of filing : **09.02.93**

(51) Int. Cl.⁵ : **C08G 63/06**

(30) Priority : **14.02.92 US 835879**

(43) Date of publication of application :
**18.08.93 Bulletin 93/33**

(84) Designated Contracting States :
**DE ES FR GB IT NL**

(71) Applicant : **GENERAL ELECTRIC COMPANY**
**1 River Road**
**Schenectady, NY 12345 (US)**

(72) Inventor : **Sivavec, Timothy Mark**
**132 Eastwood Drive**
**Clifton Park, New York 12065 (US)**

(74) Representative : **Pratt, Richard Wilson et al**
**London Patent Operation G.E. Technical**
**Services Co. Inc. Essex House 12/13 Essex**
**Street**
**London WC2R 3AA (GB)**

(54) Liquid crystalline polyester compositions and method for making.

㉗ Liquid crystalline copolyesters are provided having 4-hydroxy-3-phenylbenzoic acid units condensed with 4-hydroxy benzoic acid units. The copolyesters are prepared by agitating a mixture of 0.1 to 0.45 moles of 4-acetoxybenzoic acid per mole of 4-acetoxy-3-phenylbenzoic acid at a temperature in the range 250-340°C, removing the resulting acetic acid byproduct by distillation and vacuum stripping water of condensation at a temperature of 280-340°C. The copolyesters can be blended with a filler, such as glass fiber to produce thermotropic liquid crystalline compositions having excellent mechanical and thermal properties.

EP 0 556 021 A1

## Background of the Invention

The present invention relates to aromatic polyesters exhibiting liquid crystalline properties which result from the melt condensation of 4-acetoxy-3-phenylbenzoic acid and 4-acetoxybenzoic acid and a method for making such materials. More particularly the present invention relates to a method for effecting the condensation of 4-hydroxy-3-phenylbenzoic acid units and 4-hydroxybenzoic acid units which involves the stripping of the acetic acid byproduct from the resulting condensation mixture while it is agitated followed by vacuum stripping the resulting residue.

Prior to the present invention, thermotropic liquid crystalline polymers, particularly fully aromatic polyesters, have been of significant interest to the thermoplastic industry since thermally stable high strength fibers and molding resins with unusual physical properties can be made from these materials. Linear 1,4-linked aromatic polyesters are too high melting to be readily processed. For example, poly(4-oxybenzoate) has a melting temperature ($T_m$) of about 450°C, which can result in thermal degradation during processing. Poly(3-phenyl-4-oxybenzoate) forms a completely aromatic polyester in which substitution on the aromatic ring serves to significantly reduce its melting temperature to the range of about 367-369°C while still remaining in the liquid crystalline state. However, a melting temperature above 350°C is above normal large scale processing temperatures for engineering thermoplastics and requires solution polymerization in materials such as chloronaphthalene.

It would be desirable to prepare liquid crystalline aromatic polyesters utilizing 4-acetoxy-3-phenylbenzoic acid which would have a high molecular weight, liquid crystalline properties, excellent physical and mechanical properties and a melting temperature below about 320°C.

## Summary of the Invention

The present invention is based on the discovery that aromatic main chain copolyesters can be prepared by the cocondensation of 4-acetoxy-3-phenylbenzoic acid and 4-acetoxybenzoic acid at temperatures in the range of from about 250°C to about 340°C in the absence of a solvent. In addition, if 4-acetoxy-3-phenylbenzoic acid is cocondensed with 4-acetoxybenzoic acid at a mol percent range of from 70:30 to 90:10, a copolyester can be formed having a melting temperature below 330°C, whereas the individual homopolyesters of the respective components as previously indicated can be 367°C-369°C for poly(3-phenyl-4-oxybenzoate) while the $T_m$ of poly(4-oxybenzoate) can be as high as 450°C. Surprisingly, good crystallinity is maintained throughout the main chain copolyester structure while the $T_m$ is significantly reduced. Large scale melt polymerization can be carried out in a 4CV helicone at processing temperatures between 230°C and 320°C with continuous distillation of acetic acid at lower temperatures followed by application of high vacuum to achieve high intrinsic viscosity of the resulting copolyester.

## Statement of the Invention

There is provided by the present invention a method for making a liquid crystalline copolyester having a melting temperature in the range of from about 230°C to about 330°C comprising,

(1) agitating a mixture of about 0.1 to about 0.45 moles of 4-acetoxybenzoic acid per mole of 4-acetoxy-3-phenylbenzoic acid at a temperature in the range of about 250°C to about 340°C and distilling the resulting acetic acid byproduct from the resulting condensate, and

(2) vacuum stripping at a temperature from about 280°C to about 340°C the water of condensation resulting from the formation of the copolyester of (1).

Depending upon the scale of polymerization utilized, the copolyester can be made at processing temperatures in the range of about 230°C to 340°C by continuously distilling acetic acid followed by application of high vacuum to achieve high intrinsic viscosity material. A catalyst, such as potassium carbonate or sodium carbonate or magnesium metal can be added to improve the rate of polymerization or to modify the intrinsic viscosity or other physical properties of the polyester. Preferably, a combination of agitation, distillation and high vacuum is employed to facilitate polyester formation particularly if reinforced polyester is desired. Fillers, such as glass fiber can be used at a proportion of 5 to 50 parts by weight of glass fiber, per one hundred parts by weight of polyester.

An additional aspect of the present invention is directed to liquid crystalline copolyesters having a melting temperature in the range of about 230°C to 330°C, comprising about 0.1 to about 0.45 mole percent of condensed 4-hydroxybenzoic acid units per mole of condensed 4-hydroxy-3-phenylbenzoic acid units.

The copolyesters have been found to be soluble in m-cresol, chloro-2-phenylphenol and pentafluorophenol. Intrinsic viscosities of the polyesters can vary between about 0.52 and 1.8 dl/g in chloro-2-phenylphenol at 150°C.

In order that those skilled in the art will be better able to practice the present invention, the following examples are given by of illustration and not by way of limitation. All parts are by weight unless otherwise indicated.

Example 1

A mixture of 70.5 g (275.4 mmol) of 4-acetoxy-3-phenylbenzoic acid and 5.5 g (30.6 mmol) of 4-acetoxybenzoic acid providing a 90:10 mole ratio was stirred at a temperature of 230°C. A vacuum was maintained during the reaction at a pressure of about 0.5 to 10 mm Hg while the mixture was stirred for 3 hours at 230°C during which time 15.1 ml acetic acid had distilled (86% of theoretical). The temperature was then increased to 310°C over a 2 hour period. A vacuum at 0.5 mm Hg was applied and after 1 hour at 310°C, a tan colored polymer melt was recovered under nitrogen.

The above procedure was repeated except that copolyesters were prepared having a mole ratio of 80:20 of 4-acetoxy-3-phenylbenzoic acid and 4-acetoxybenzoic acid and the condensation conditions for making the copolyester were varied with respect to time and temperature. The following results were obtained where h indicates hours:

TABLE 1

Properties of Liquid Crystalline Copolymers of 4-Hydroxy-3-phenylbenzoic Acid and 4-Hydroxybenzoic Acid

| Sample | Composition | Condensation Method | $T_m$(°C) | Hfusion (j/g) | TGA(°C) |
|--------|-------------|---------------------|-----------|---------------|---------|
| A. | 4-acetoxy-3-phenylbenzoic acid, 4-acetoxybenzoic acid (90:10) | 2h/250°C+ 4h/250-340°C, vac. | 331 | 36.5 | 485 |
| B. | 4-acetoxy-3-phenylbenzoic acid, 4-acetoxybenzoic acid (80:20) | 2h/250° C+ 2h/250-340°C, vac. | 325 | 32.3 | 481 |
| C. | 4-acetoxy-3-phenylbenzoic acid, 4-acetoxybenzoic acid (70:30) | 2h/245° C+ 2h/250-340°C, vac. | 299 | 20.0 | 472 |

[a] Temperature at which 5% of initial weight is lost, measured in air at a heating rate of 10°C/min

In Table 1 copolyesters exhibited birefrigent, anisotropic liquid crystalline phases at temperatures above 240°C when examined microscopically between cross polarizers. The copolyesters also showed excellent thermal oxidative stability.

Example 2

A mixture of 8996 g (3.50 mol) of 4-acetoxy-3-phenylbenzoic acid and 158 g (0.875 mols) of 4-acetoxybenzoic acid (80-20 composition) was added to a 4CV Helicone having two water-cooled condensers, a nitrogen inlet and a Dean Stark trap for the removal of evolved acetic acid. The mixture was heated with stirring at 269°C at which time acetic acid began to distill. After 45 minutes, distillation of acetic acid had stopped and the melt temperature had climbed to 289°C. The temperature of the melt was increased to 298°C and held at that temperature for 3.25 hours with continuous stirring. A high vacuum was then applied (10 torr) for the next two hours and the temperature increased over a period of one hour at 314°C and held at that temperature for an hour. The melt viscosity was found to increase significantly during this period. The vacuum was removed. DSC measurements of the Helicone-processed material gave a $T_m$ of 220°C($H_{fusion}$ 4.3/J/g) and a $T_{cryst}$ of 170°C along with an intrinsic viscosity of 1.6 dl/g. Additional DSC measurements or "heats" were run to determine polymer characteristics. Hot-stage polarized microscopy of the polymer melt at temperatures above 240°C indicated birefrigence attributable to an anisotropic liquid crystalline state.

The above procedures were repeated with additional copolyesters of 4-acetoxy-3-phenylbenzoic acid and 4-acetoxybenzoic acid and the following results were obtained:

**TABLE 2**

Glass Transitions, Melting Temperatures, and Heats of Fusion of Copolyesters Derived from 4-Hydroxy-3-phenylbenzoic Acid and 4-Hydroxybenzoic Acid[a] Prepared by 4CV Helicone Processing

| Sample | Composition | | $T_g$(°C) | $T_m$(°C) | Hfusion(j/g) |
|---|---|---|---|---|---|
| D. | 4-acetoxy-3-phenylbenzoic acid, 4-acetoxybenzoic acid (90:10) Helicone (2.6 lb run) | 1st heat | 135 | 306,317 | 1.7, 1.4 |
| | | 2nd | | 269,307 | 4.3, 1.4 |
| | | 3rd | 134 | 262,301 | 1.8, 0.2 |
| E. | 4-acetoxy-3-phenylbenzoic acid, 4-acetoxybenzoic acid (80:20) Helicone (2.3 lb run) | 1st heat | 137 | 230,301 | 7.9, 3.7 |
| | | 2nd | 137 | 222,311 | 3.7, 3.1 |
| | | 3rd | 136 | 220,309 | 4.3, 2.7 |
| F. | 4-acetoxy-3-phenylbenzoic acid, 4-acetoxybenzoic acid (70:30) Helicone (2.2 lb run) | 1st heat | 136 | 236 | 1.1 |
| | | 2nd | 136 | 230 | 0.5 |
| | | 3rd | 136 | 224 | 0.7 |

[a]DSC heating scans were measured with a heating rate of 20°C/min. DSC cooling scans were measured with a cooling rate of ~20°C/min.

The 90/10, 80/20 and 70/30 Helicone prepared compositions in Table 2 were subsequently compounded with 30 weight % PPG-3540 1/8″ glass fiber in a WP 28 mm twin screw extruder, molded into parts and mechanically tested. Additional blends were prepared following the same procedure utilizing Xydar glass fiber in place of PPG-3540 glass fiber. The following results were obtained:

Table 3

| Mechanical Properties of Liquid Crystalline Copolyesters of 4-Hydroxy-3-phenyl-benzoic Acid and 4-Hydroxybenzoic Acid Filled with 30% PPG-3540 1/8″ Glass Fiber | | | | |
|---|---|---|---|---|
| Sample | D | E | F | Xydar 30 % Glass |
| Mold Temp. (°F) | 200 | 200 | 230 | 280 |
| Barrel Temp. (°F) | 625 | 625 | 625 | 690 |
| Tensile Strength (kpsi) | 15.6 | 16.1 | 15.8 | 19.2 |
| % Elong. | 3.5 | 3.0 | 2.8 | 1.9 |
| Flex Modulus (kpsi) | 2090 | 2130 | 2230 | 2010 |
| Flex Strength (kpsi) | 23.1 | 28.2 | 27.8 | 24.1 |
| Izod Impact (ft-lb/in) | 2.6 | 2.4 | 2.4 | 2.2 |

Although the above examples are directed to only a few of the very many variables which can be utilized in the practice of the method of the present invention and the compositions obtained thereby, it should be understood that the present invention is directed to a much broader variety of copolyesters and blends and methods for making such materials as set forth in the description preceding these examples.

**Claims**

1. A method for making a liquid crystalline copolyester having a melting temperature in the range of from about 230°C to about 330°C comprising,
   (1) agitating a mixture of about 0.1 to about 0.45 moles of 4-acetoxybenzoic acid per mole of 4-acetoxy-3-phenylbenzoic acid at a temperature in the range of about 250°C to about 340°C and distilling the resulting acetic acid byproduct from the resulting condensate, and,
   (2) vacuum stripping at a temperature from about 280°C to about 340°C the water of condensation resulting from the formation of the copolyester of (1).

2. A method in accordance with claim 1, where the aromatic copolyester consists essentially of 90 mol % of 4-hydroxy-3-phenylbenzoic acid units condensed with about 10 mol % of 4-hydroxybenzoic acid units.

3. Liquid crystalline copolyesters having a melting temperature in the range of about 230°C to about 330°C comprising about 0.1 to about 0.45 mole of condensed 4-hydroxybenzoic acid units per mole of condensed 4-hydroxy-3-phenylbenzoic acid units.

4. A blend of the liquid crystalline copolyester of claim 3, and glass fiber.

**European Patent Office**

**EUROPEAN SEARCH REPORT**

Application Number

EP 93 30 0933

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 279 803 (CALUNDANN, G.W.) * column 6, line 19 - line 32; claims 1-3,9,10,13-27; examples I,II * | 1-4 | C08G63/06 |
| A | EP-A-0 447 602 (THE DOW CHEMICAL CO) * claims * | 1 | |
| L | CHEMICAL ABSTRACTS, vol. 117, no. 10, 7 September 1992, Columbus, Ohio, US; abstract no. 90932s, KRICHELDORF, H.R. ET AL. 'Copolyesters of 4-hydroxy-3-phenylbenzoic acid...' * abstract * & POLYMER vol. 33, no. 11, pages 2431 - 2436 & DATBASE STN, FILE REG, REG. NO. 142957-17-3 | 1 | |

TECHNICAL FIELDS SEARCHED (Int. Cl.5)

C08G

The present search report has been drawn up for all claims

| Place of search | Date of completion of the search | Examiner |
|---|---|---|
| BERLIN | 19 MAY 1993 | VOIGTLAENDER R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document